(19) Europäisches Patentamt
European Patent Office
Office européen des brevets

(11) **EP 4 477 705 A1**

(12) **EUROPEAN PATENT APPLICATION**
published in accordance with Art. 153(4) EPC

(43) Date of publication:
**18.12.2024 Bulletin 2024/51**

(21) Application number: **22926060.9**

(22) Date of filing: **21.11.2022**

(51) International Patent Classification (IPC):
**C08L 23/00** (2006.01)     **C08L 53/02** (2006.01)
**C08L 77/00** (2006.01)

(52) Cooperative Patent Classification (CPC):
**C08L 23/00; C08L 53/02; C08L 77/00**

(86) International application number:
**PCT/JP2022/042995**

(87) International publication number:
**WO 2023/153044 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2022   JP 2022019726**

(71) Applicant: **MCPP Innovation LLC
Tokyo 100-8251 (JP)**

(72) Inventor: **OMORI, Kazuko
Tokyo 100-8251 (JP)**

(74) Representative: **Hoffmann Eitle
Patent- und Rechtsanwälte PartmbB
Arabellastraße 30
81925 München (DE)**

(54) **STYRENE-BASED THERMOPLASTIC ELASTOMER COMPOSITION**

(57)   A styrenic thermoplastic elastomer composition comprising the following components (A) to (D), wherein a content of the component (C) is 1 to 45% by mass based on a total amount of the components (A) to (C). Component (A): styrene-based thermoplastic elastomer Component (B): olefin-based polymer Component (C): amide-based polymer Component (D): compatibilizer

EP 4 477 705 A1

## Description

Technical Field

The present invention relates to a styrenic thermoplastic elastomer composition. The present invention also relates to a molded article made of the styrenic thermoplastic elastomer composition.

Background Art

Since styrenic thermoplastic elastomer compositions have excellent compression set and flexibility, they have been widely used in a variety of fields including medical applications such as gaskets, caps, rubber stoppers, and the like; food applications such as cap liners, and the like; daily miscellaneous goods such as packings, casters, cushioning materials, vibration absorbers, and the like; toys and exercise equipment applications; stationerys such as pen grips, and the like; automobile interior material applications such as shift grips, and the like; packings; and home appliance applications such as vibration absorbers, and the like.

Among the various uses of thermoplastic elastomer compositions, in the use of medical rubber stoppers having needle pricking parts, thermoplastic elastomer compositions require to have excellent compression set properties sufficient to obtain excellent liquid leakage resistance for the following reasons.

In medical containers such as infusion bags and vials that have rubber stoppers attached, there may be some liquid remaining. When a needle such as a syringe needle is removed from the rubber stopper while the liquid remains, the liquid may leak or scatter. For this reason, a sealing material having a needle pricking part, such as a medical rubber stopper, is required to be resistant to liquid leakage.

From the viewpoint of liquid leakage resistance, rubber materials such as isoprene rubber, butadiene rubber, butyl rubber, and the like have been used as rubber stopper materials for medical containers.

However, a method for producing a rubber material includes a step of kneading rubber component raw materials to obtain a rubber mixture, and a step of manufacturing a rubber stopper molded article by vulcanization. Therefore, the method has disadvantages such as requiring a large number of steps, and a large-scale equipment. As a result, there is also a problem that a production cost is high.

Therefore, in recent years, various medical rubber stoppers using thermoplastic elastomers have been proposed as exemplified in Patent Literature 1.

Various efforts have been made to improve the compression set of styrenic thermoplastic elastomer compositions.

For example, Patent Literature 2 describes a thermoplastic elastomer resin composition having excellent flexibility, heat deformation resistance (compression set), mechanical strength, and the like. The composition contains a block copolymer and/or hydrogenated block copolymer mainly composed of a vinyl aromatic compound and a conjugated diene compound; non-aromatic softener for rubber; peroxide cross-linked modified olefin-based resin; peroxide decomposition type olefin-based resin; amide-based polymer, and the like; in a specific blending ratio.

[Patent Literature 1] WO 2017/150714 A1

[Patent Literature 2] JP H9-316285 A

Summary of Invention

Styrenic thermoplastic elastomer compositions are optimally used in applications that require recovery from distortion even if the shape is deformed by a load. In order to adapt a styrenic thermoplastic elastomer composition to such uses, it is necessary to have excellent compression set and flexibility.

However, the specific thermoplastic elastomer composition using the amide-based polymer described in Patent Literature 2 has room for improvement in terms of achieving both compression set and flexibility. In particular, in applications for medical rubber stoppers having needle pricking parts, it is desirable to have compression set that can sufficiently ensure liquid leakage resistance.

An object of the present invention is to provide a styrenic thermoplastic elastomer composition which can provide a molded article having excellent compression set and flexibility, and a molded article thereof.

The present inventors have found that molded articles having excellent compression set and flexibility can be obtained by controlling the content of the amide-based polymer within a specific numerical range in a styrenic thermoplastic elastomer composition containing a styrene-based thermoplastic elastomer, an olefin-based polymer, a polyamide-based polymer, and a compatibilizer. The present invention is based on this finding.

The present invention has the following features.
[1] A styrenic thermoplastic elastomer composition comprising the following components (A) to (D), wherein a content of the component (C) is 1 to 45% by mass based on a total amount of the components (A) to (C).

Component (A): styrene-based thermoplastic elastomer

Component (B): olefin-based polymer

Component (C): amide-based polymer

Component (D): compatibilizer

[2] The styrenic thermoplastic elastomer composition according to [1], further comprising the following component (E). Component (E): hydrocarbon softener for rubber

[3] The styrenic thermoplastic elastomer composition according to [2], containing the component (A) in the largest amount in the component composition excluding the component (E).

[4] The styrenic thermoplastic elastomer composition according to any one of [1] to [3], comprising 5 to 1100 parts by mass of the component (C) based on 100 parts by mass of the component (B).

[5] The styrenic thermoplastic elastomer composition according to any one of [1] to [4], wherein the content of the component (D) is 0.1 to 20% by mass based on the total amount of the components (A) to (D).

[6] The styrenic thermoplastic elastomer composition according to any one of [1] to [5], wherein a part of the raw material of the component (C) is derived from castor oil.

[7] The styrenic thermoplastic elastomer composition according to any one of [1] to [6], wherein the styrenic thermoplastic elastomer composition has a Duro hardness A of 10 to 75.

[8] The styrenic thermoplastic elastomer composition according to any one of [1] to [7], wherein a gel fraction of the styrenic thermoplastic elastomer composition is 25% by mass or less.

[9] The styrenic thermoplastic elastomer composition according to any one of [1] to [8], wherein the component (D) is a polymer having a nonpolar site and a polar site.

[10] The styrenic thermoplastic elastomer composition according to [9], wherein the polymer having a nonpolar site and a polar site is a polymer in which a polar site is grafted onto a nonpolar polymer.

[11] The styrenic thermoplastic elastomer composition according to [10], wherein the polymer in which a polar site is grafted onto a nonpolar polymer is a polymer grafted with at least one selected from the group consisting of unsaturated carboxylic acids and derivatives thereof.

[12] The styrenic thermoplastic elastomer composition according to [11], wherein the polymer in which a polar site is grafted onto a nonpolar polymer is at least one polymer selected from a maleic anhydride graft-modified olefin-based polymer and a maleic anhydride graft-modified styrene-based elastomer.

[13] A molded article made of the styrenic thermoplastic elastomer composition according to any one of [1] to [12].

[14] A sealing material made of the styrenic thermoplastic elastomer composition according to any one of [1] to [12].

[15] The sealing material according to [14], wherein the sealing material is a rubber stopper.

[16] The sealing material according to [15], wherein the sealing material is a rubber stopper having a needle pricking part.

[17] An infusion bag comprising a rubber stopper made of the styrenic thermoplastic elastomer composition according to any one of [1] to [12].

Advantageous Effects of Invention

According to the present invention, it is possible to provide a styrenic thermoplastic elastomer composition which can provide a molded article having excellent compression set and flexibility.

The molded article of the present invention made of the styrenic thermoplastic elastomer composition of the present invention has excellent liquid leakage resistance, so it can be also suitably used for rubber stoppers having a needle pricking part such as syringe gaskets, rubber stoppers for infusion bags and vial bottles, cap liners, packings, and the like, which require liquid leak sealability.

Brief Description of Drawings

[Fig. 1] Figs. 1(a) and 1(b) are drawings showing an example of an embodiment of a rubber stopper having a needle pricking part, in which Fig. 1(a) is a plan view and Fig. 1(b) is a cross section along line B-B in Fig. 1(a).

[Fig. 2] Figs. 2(a) and 2(b) are drawings showing another example of the embodiment of the rubber stopper having a needle pricking part, in which Fig. 2(a) is a plan view and Fig. 2(b) is a cross section along line B-B in Fig. 2(a).

[Fig. 3] Figs. 3(a) and 3(b) are drawings showing another example of the embodiment of the rubber stopper having a needle pricking part, in which Fig. 3(a) is a plan view and Fig. 3(b) is a cross section along line B-B in Fig. 3(a).

[Fig. 4] Figs. 4(a) and 4(b) are drawings showing still another example of the embodiment of the rubber stopper having a needle pricking part, in which Fig. 4(a) is a plan view and Fig. 4(b) is a cross section along line B-B in Fig. 4(a).

[Fig. 5] Figs. 5(a) and 5(b) are drawings showing still another example of the embodiment of the rubber stopper having a needle pricking part, in which Fig. 5(a) is a plan view and Fig. 5(b) is a cross section along line B-B in Fig. 5(a).

[Fig. 6] Fig. 6 is a schematic cross sectional view showing a rubber stopper molded article and a fixing jig produced for evaluating liquid leakage resistance in Examples.

Description of Embodiments

Embodiments of the present invention will be described in detail below.

The following description is an example of the embodiment of the present invention, ant the present invention is not limited to the following description. The present invention can be modified and practiced in any manner that is consistent with the scope of the present invention.

In this specification, when numerical values or physical property values are expressed by using "to" with preceding and following numbers, it is to be understood that the preceding and following numbers are included.

[Styrenic thermoplastic elastomer composition]

The styrenic thermoplastic elastomer composition of the present invention includes a component (A): styrene-based thermoplastic elastomer; a component (B): olefin-based polymer; a component (C): amide-based polymer; and a component (D): compatibilizer. In the composition, a content of the component (C) is 1 to 45% by mass based on a total amount of the components (A) to (C). The styrenic thermoplastic elastomer composition of the present invention may further contain a component (E): hydrocarbon softener for rubber.

In the styrenic thermoplastic elastomer composition of the present invention, it is preferable that the styrene-based thermoplastic elastomer of the component (A) has the highest content in the component composition excluding the component (E).

<Mechanism>

A molded article made of the styrenic thermoplastic elastomer composition of the present invention exhibits the effect of being excellent compression set and flexibility.

Although the details of why the styrenic thermoplastic elastomer composition of the present invention exhibits such effect are not clear, it is thought to be as follows.

Generally, it is known that compression set is improved by blending an amide-based polymer into a styrene thermoplastic elastomer composition, but the hardness increases and flexibility is impaired, which is a trade-off. In the present invention, it has been found that flexibility and compression set can be improved at the same time by controlling the content of the component (C) in the styrenic thermoplastic elastomer composition containing the components (A) to (D). The mechanism can be considered as follows.

In the styrenic thermoplastic elastomer composition of the present invention, the component (B) is considered to primarily constitute a matrix portion, and the component (C) is considered to primarily constitute a domain portion. It is considered that the component (C), which is the domain part, strengthens the matrix part by reinforcing the component (B) that constitutes the matrix part, and improves compression set by reducing plastic deformation of the matrix part.

Furthermore, it is considered that, since the styrenic thermoplastic elastomer composition of the present invention contains the component (D), the component (C) can be finely dispersed in the component (A) and the component (B), and as a result even better compression set can be obtained.

At this time, it is considered that both compression set and flexibility can be achieved by controlling the amount of the matrix portion and the amount of the component (C).

When the amount of the component (C) is too small relative to the amount of the matrix portion, the above mentioned effect of the component (C) to strengthen the matrix portion will not be sufficiently obtained, and the desired compression set will not be achieved. On the other hand, when the amount of the component (C) is too large relative to the amount of the matrix portion, the hardness of the thermoplastic elastomer composition will increase, making it difficult to achieve balancing flexibility. In addition, due to its high hardness, stress upon compression cannot be released by deformation, and the stress applied to the thermoplastic elastomer composition increases, which tends to increase (deteriorate) compression set. In other words, when the amount of the component (C) is larger than the amount of the matrix portion, the side effect of compression set which increases hardness by adding the component (C) exceeds the above mentioned effect of improving compression set by reinforcing the component (B) constituting the matrix portion with the component (C). As a result, compression set deteriorates.

<Component (A): Styrene-based thermoplastic elastomer>

As the styrene-based thermoplastic elastomer of the component (A), a block copolymer selected from the group consisting of a block copolymer having at least one polymer block P derived from a vinyl aromatic compound and at least one polymer block Q derived from a conjugated diene, and a block copolymer obtained by hydrogenating the block copolymer (hydrogenated block copolymer) can be used.

The polymer block P is a polymer block of a monomer mainly consisting of a vinyl aromatic compound. The polymer block Q is a polymer block of a monomer mainly consisting of a conjugated diene. Here, "mainly" means that the content ratio in the block is 50 mol% or more.

The vinyl aromatic compounds of the monomer comprising the polymeric block P are not limited, but styrene derivatives such as styrene, $\alpha$-methylstyrene, and chloromethylstyrene are preferred. Among these, styrene is preferred as the main component. One of these may be used alone, or two or more can be used in combination. The polymer block P may contain monomers other than vinyl aromatic compounds as raw materials.

The monomers constituting the polymeric block Q are not limited, but butadiene alone, isoprene alone, or a mixture of butadiene and isoprene is preferred. One of these can be used alone, or two or more can be used in combination. The polymer block Q may contain monomers other than butadiene and isoprene as raw materials.

The polymer block Q may be a hydrogenated derivative obtained by hydrogenating the double bonds after polymerization, that is a hydrogenated block copolymer. The hydrogenation rate of the polymer block Q is not limited, but is preferably 50% or more and 100% or less by mass, and more preferably 80% or more and 100% or less by mass. By hydrogenating the polymer block Q within the above range, thermal stability and weathering stability tend to improve. The same applies to the case where the polymer block P uses a diene component as a raw material. The hydrogenation rate can be measured by $^{13}$C-NMR.

The styrene-based thermoplastic elastomer preferably has a styrene unit content of 8% or more and 45% or less by mass. When the styrene unit content of the styrene-based thermoplastic elastomer is equal to or more than the above lower limit, the bleeding out of the hydrocarbon softener for rubber from the styrenic thermoplastic elastomer composition can be suppressed. When the styrene unit content of the styrene-based thermoplastic elastomer is equal to or less than the above upper limit, the hardness of the styrene-based thermoplastic elastomer can be prevented from becoming too high. The styrene unit content of the styrene-based thermoplastic elastomer is more preferably 10% or more and 40% or less by mass.

The term "styrene unit content" is used to include not only the content of styrene units, but also the content of the component units in which atoms or atomic groups other than hydrogen atoms are substituted into the aromatic ring of the styrene unit. The styrene unit content can be measured by $^{13}$C-NMR.

The chemical structure of the copolymer having the polymer block P and the polymer block Q in the styrene-based thermoplastic elastomer may be linear, branched, radial, or the like. The styrene-based thermoplastic elastomer is preferably a block copolymer represented by the following formula (1) or (2).

Further, the block copolymer represented by the following formula (1) or (2) is preferably a hydrogenated derivative (hydrogenated block copolymer). When the copolymer represented by the following formula (1) or (2) is a hydrogenated block copolymer, heat resistance stability and weather resistance stability tend to be good.

$$\mathrm{P-(Q-P)_m} \qquad (1)$$

$$\mathrm{(P-Q)_n} \qquad (2)$$

(In the formula, P represents the polymer block P, and Q represents the polymer block Q. m represents an integer from 1 to 5. n represents an integer from 1 to 5.)

In the formula (1) or (2), m and n are preferably larger in terms of lowering the order-disorder transition temperature as a rubber-like polymer, but smaller in terms of ease of production and cost.

As block copolymer and/or hydrogenated block copolymer of styrene-based thermoplastic elastomer (hereinafter collectively referred to as "(hydrogenated) block copolymers"), the (hydrogenated) block copolymer represented by the formula (1) is more preferable than the (hydrogenated) block copolymer represented by the formula (2) because of its superior rubber elasticity.

The upper limit of the weight average molecular weight of the styrene-based thermoplastic elastomer is not limited, but is usually 700,000 or less, preferably 600,000 or less, and more preferably 500,000 or less. The lower limit of the weight average molecular weight of styrene-based thermoplastic elastomers is not limited, but is usually 40,000 or more, preferably 60,000 or more, and more preferably 90,000 or more. By controlling the weight average molecular weight of the styrene-based thermoplastic elastomer to be equal to or less than the above upper limit, moldability and appearance of the molded article can be maintained favorably. By controlling the weight average molecular weight of the styrene-based thermoplastic elastomer to be equal to or more than the above lower limit, bleeding out of the hydrocarbon softener for rubber from the styrenic thermoplastic elastomer composition can be suppressed, and compression set of the resulting molded article can be reduced.

The weight average molecular weight of the styrene-based thermoplastic elastomer is a polystyrene equivalent value measured by gel permeation chromatography (hereinafter sometimes abbreviated as GPC) under the following measurement conditions 1 or the following measurement conditions 2.

<Measurement conditions for gel permeation chromatography (GPC)>

Measurement conditions 1: For example, the molecular weight of the styrene-based thermoplastic elastomer as component (A-1) used in Examples described below
It was measured by GPC under the following conditions and converted to polystyrene.

Equipment: HLC-8120 manufactured by Tosoh Corporation

Column: TSKgel Super H1000+H2000+H3000 manufactured by Tosoh Corporation

Detector: Differential refractive index detector (RI/built-in)

Solvent: Tetrahydrofuran

Temperature: 40°C

Flow rate: 0.5mL/min

Injection volume: 10$\mu$L

Concentration: 0.2% by mass

Calibration sample: Monodisperse polystyrene

Calibration method: Polystyrene equivalent

Measurement conditions 2: For example, the molecular weight of the styrene-based thermoplastic elastomer as component (A-2) used in Examples described below

It was measured by GPC under the following conditions, converted polystyrene, and a differential molecular weight distribution map was created. The analysis range was a molecular weight of 10,000 or more.

Equipment: HLC-8220 GPC manufactured by Tosoh Corporation

Column: TSKgel Super HM-M manufactured by Tosoh Corporation

Detector: Differential refractive index detector (RI/built-in)

Solvent: Chloroform special grade

Temperature: 40°C

Flow rate: 0.3mL/min

Injection volume: 20µL

Concentration: 0.1% by mass

Calibration sample: monodisperse polystyrene

Calibration method: Polystyrene equivalent

The styrene unit content of the styrene-based thermoplastic elastomer is not particularly limited, but from the viewpoint of strength and heat resistance, it is preferably 5% by mass or more, more preferably 8% by mass or more, and even more preferably 10% by mass or more. From the viewpoint of flexibility and impact resistance, the styrene unit content of the styrene-based thermoplastic elastomer is preferably 50% by mass or less, more preferably 45% by mass or less, and even more preferably 40% by mass or less.

The method for producing the styrene-based thermoplastic elastomer is not particularly limited and may be any method as long as the above structure and physical properties can be obtained. For example, it can be obtained by block polymerization in an inert solvent using a lithium catalyst or the like. For the hydrogenation of the block copolymer, a known method such as hydrogenation in an inert solvent in the presence of a hydrogenation catalyst can be employed.

Among those described above, styrene-conjugated diene block copolymers and/or their hydrogenated products are preferred as styrene-based thermoplastic elastomers, and hydrogenated products in which the conjugated diene of the styrene-conjugated diene block copolymer is composed of one or more selected from isoprene and butadiene are more preferred. The styrene-conjugated diene block copolymer and/or its hydrogenated product may have a polar group if necessary.

Examples of the styrene-conjugated diene block copolymer and/or its hydrogenated product include styrene-butadiene block copolymer and/or its hydrogenated product, styrene-butadiene-styrene block copolymer and/or its hydrogenated product, styrene-isoprene block copolymer and/or its hydrogenated product, styrene-isoprene-styrene block copolymer and/or its hydrogenated product, styrene-butadiene-isoprene block copolymer and/or its hydrogenated product, styrene-isoprene-butadiene-styrene block copolymer and/or its hydrogenated product, and the like.

Examples of hydrogenated products of styrene-butadiene block copolymer include styrene-butadiene-butylene copolymer (SBB), styrene-ethylene-butylene copolymer (SEB), and styrene-ethylene-butylene copolymer (SEB).

Examples of hydrogenated products of styrene-butadiene-styrene block copolymer include styrene-ethylene-butylene-styrene copolymers (SEBS).

Examples of hydrogenated products of styrene-isoprene-styrene block copolymer include styrene-ethylene-propylene-styrene copolymer (SEPS).

Examples of hydrogenated products of styrene-isoprene-butadiene-styrene block copolymer include styrene-ethylene-ethylene-propylene-styrene copolymer (SEEPS).

Among these, from the viewpoint of tensile strength and compression set, styrene-ethylene-butylene-styrene copolymer (SEBS) which is a hydrogenated product of styrene-butadiene-styrene block copolymer, styrene-ethylene-ethylene-propylene-styrene copolymer (SEEPS) which is a hydrogenated product of styrene-isoprene-butadiene-styrene block copolymer, and styrene-ethylene-propylene-styrene copolymer (SEPS) which is a hydrogenated product of styrene-isoprene-styrene block copolymer are preferred. These may be completely hydrogenated or partially hydrogenated.

It is also possible to use a commercially available styrene-based thermoplastic elastomer. As a commercially available product, an appropriate product can be selected and used from "Krayton (registered trademark)" G series manufactured by Kraton Polymer Japan Co., Ltd., "TAIPOL (registered trademark)" and "VECTOR (registered trademark)" series manufactured by TSRC, "Septon (registered trademark)" series, "Hybler (registered trademark)" series manufactured by Kuraray Co., Ltd., "Tuftec (registered trademark)" series and "S.O.E. (registered trademark)" series manufactured by Asahi Kasei Corporation, and the like.

The styrene-based thermoplastic elastomer may be used alone or in combination of two or more different in physical properties, block structure, or hydrogenation or non-hydrogenation, etc.

<Component (B): Olefin-based polymer>

The styrenic thermoplastic elastomer composition of the present invention contains an olefin-based polymer as the component (B). By blending the component (B) into the styrenic thermoplastic elastomer composition, compression set can be controlled to be low.

As the olefin-based polymer, any known ones can be used, such as propylene-based polymers, ethylene-based polymers, and the like.

Propylene-based polymers include homopolypropylene, random polypropylene, block polypropylene, and modified polypropylene.

Examples of the modified polypropylene include modified polypropylene obtained by graft-modifying a propylene-based polymer with a diene compound. Any method may be used to obtain modified polypropylene, and for example, it can be produced by the method described in JP 2015-98542 A.

As the ethylene-based polymer, any known one can be used, and it may be a homopolymer of ethylene or a copolymer of ethylene with an $\alpha$-olefin or other monomer.

Specific examples of ethylene-based polymer include low density polyethylene (LDPE), high density polyethylene (HDPE), medium density polyethylene (MDPE), linear low density polyethylene (LLDPE), and ethylene-propylene copolymers.

The olefin-based polymer contained in the styrenic thermoplastic elastomer composition of the present invention can be selected depending on the intended use.

Propylene-based polymers are preferred for applications that require heat resistance, such as medical equipments that are sterilized by high-pressure steam, food parts that are sterilized by retort, and automotive interiors that are exposed to high-temperature environments in the summer.

The melt flow rate (MFR) of the olefin-based polymer is preferably 0.5 g/10 minutes or more, and more preferably 1.0 g/10 minutes or more, and preferably 200 g/10 minutes or less, and more preferably 100 g/10 minutes or less. When the MFR of the olefin-based polymer is within the above range, the molded article made of the styrenic thermoplastic elastomer composition of the present invention tends to have excellent compression set and flexibility.

The MFR of the olefin-based polymer is a value measured according to JIS K7210-1 or JIS K6922-2 at a temperature of 230°C, under a load of 21.2N, and for 10 minutes.

Olefin-based polymers can be obtained as commercial products.

As a commercially available propylene-based polymer, an appropriate product can be selected and used from "Novatec (registered trademark) PP" series manufactured by Japan Polypropylene Corporation, "PP processability improvement material" series manufactured by Kaneka Corporation, polypropylene manufactured by SunAllomer Ltd., and the like.

As commercially available ethylene-based polymer, an appropriate product can be selected and used from "Novatec (registered trademark)" series manufactured by Japan Polyethylene Corporation, "Creolex (registered trademark)" series manufactured by Asahi Kasei Corporation, "Umerit series" manufactured by Ube-Maruzen Polyethylene Co., Ltd, and the like.

The olefin-based polymer may be used alone or in combination of two or more different in physical properties, copolymer composition, structure, etc.

<Component (C): Amide-based polymer>

Specific examples of the amide-based polymer as component (C) contained in the styrenic thermoplastic elastomer composition of the present invention include polyamide 11 (PA11), polyamide 12 (PA12), polyether block amide copolymers such as a copolymer of polyamide 11 (PA11) and polytetramethylene glycol (PTMG), and a copolymer of polyamide 12 (PA12) and PTMG, nylon 6, nylon 66, nylon 6/66, nylon 6/66 copolymer resin, nylon 610 , nylon 612, nylon 6T, nylon 6I, nylon 9T, nylon M5T, polyamide MXD6, and the like. Preferred are PA11, PA12, a copolymer of PA11 and PTMG, a copolymer of PA12 and PTMG, nylon 6, and nylon 6/66, and particularly preferred are PA11 and PA12.

Amide-based polymers using raw materials derived from bio-based raw materials such as castor oil are preferred from the viewpoint of reducing environmental load in recent years.

The melting point of the amide-based polymer is preferably 150°C or higher, more preferably 155°C or higher, and even more preferably 160°C or higher from the viewpoint of compression set. From the viewpoint of moldability, the melting point of the amide-based polymer is preferably 280°C or lower, more preferably 260°C or lower, and even more preferably 240°C or lower.

The melting point of the polyamide-based polymer is a value measured by DSC method according to ISO 11357-1 or ISO 11357-3 at a heating and cooling rate of 10°C/minute.

Polyamide-based polymers can be obtained as commercial products. As a commercially available product, an appropriate product can be selected and used from "Rilsan (registered trademark)" series and "Pebax (registered trademark)" series manufactured by Arkema, "Novamid (registered trademark)" series manufactured by DSM, "UBESTA (nylon 12)" series and "Nylon 6" series manufactured by Ube Corporation, "Reny (registered trademark)" series manufactured by Mitsubishi Engineering-Plastics Corporation, "Diamid (registered trademark)" series manufactured by Daicel Evonik, and "Amiran (registered trademark)" series manufactured by Toray Industries, Inc.

The amide-based polymer may be used alone or in combination of two or more different in physical properties, copolymer compositions, structures or the like.

<Component (D): Compatibilizer>

The styrenic thermoplastic elastomer composition of the present invention contains a compatibilizer as the component (D). The compatibilizer of the component (D) can impart good compression set to the styrenic thermoplastic elastomer composition by finely dispersing the component (C) mainly in the component (A) and the component (B) in the styrenic thermoplastic elastomer composition.

A compatibilizer generally has the effect reducing the dispersed particle size by compatibilizing a nonpolar material and a polar material.

As the compatibilizer, any known compatibilizer can be used, regardless of whether it is a reactive-type compatibilizer or a non-reactive-type compatibilizer, as long as it is a compound having both a nonpolar site and a polar site. Among these, polymers having a nonpolar site and a polar site are preferred. Examples of the polymer having a nonpolar site and a polar site include polymers in which a nonpolar site and a polar sites have a random structure, polymers having a block of a nonpolar site and a block of a polar site, and modified polymers in which a nonpolar polymer is modified with a compound having a polar site. Although any of these can be used, a modified polymer in which a nonpolar polymer is modified with a compound having a polar site is preferred. Examples of the modified polymer in which a nonpolar polymer is modified with a compound having a polar site include a polymer in which a polar site is grafted onto a nonpolar polymer.

Examples of the polymer in which a polar site is grafted onto a nonpolar polymer include polymers grafted with at least one type selected from the group consisting of unsaturated carboxylic acids such as maleic anhydride and derivatives thereof (unsaturated carboxylic acid component), olefin-based polymers grafted with vinyl-based polymers such as styrene/acrylonitrile copolymers, ethylene/glycidyl methacrylate amine (E-GMA) copolymers, and amine graft-modified styrene-based elastomers. Examples of the polymer grafted with at least one type selected from the group consisting of unsaturated carboxylic acids such as maleic anhydride and derivatives thereof (unsaturated carboxylic acid component) include maleic anhydride graft-modified olefin-based polymers, and maleic anhydride graft-modified styrene-based elastomers.

The type and structure of the compatibilizer does not matter as long as it can finely disperse the component (C) in the styrenic thermoplastic elastomer composition, but the polymer grafted with at least one type selected from the group consisting of unsaturated carboxylic acids such as maleic anhydride and derivatives thereof (unsaturated carboxylic acid component) is preferred, the maleic anhydride graft-modified polymer is more preferred, and the maleic anhydride graft-modified olefin-based polymer is particularly preferred.

The maleic anhydride graft-modified olefin-based polymer can be produced by adding an unsaturated carboxylic acid such as maleic anhydride/or its anhydride (unsaturated carboxylic acid component) to a polyolefin to be modified, such as an ethylene-based polymer or a propylene-based polymer, and by graft polymerizing the unsaturated carboxylic acid component onto the polyolefin, preferably in the presence of a radical generator.

Examples of unsaturated carboxylic acid for graft modification of a polyolefin include $\alpha,\beta$-ethylenically unsaturated carboxylic acids such as acrylic acid, maleic acid, fumaric acid, tetrahydrofumaric acid, itaconic acid, citraconic acid, crotonic acid, isocrotonic acid, and the like. Examples of unsaturated carboxylic acid anhydride include unsaturated carboxylic acid anhydrides such as 2-octen-1-yl succinate anhydride, 2-dodecen-1-yl succinate anhydride, 2-octadecen-1-yl succinate anhydride, maleic anhydride, 2,3-dimethylmaleic anhydride, bromomaleic anhydride, dichloromaleic anhydride, citraconic anhydride, itaconic anhydride, 1-butene-3,4-dicarboxylic anhydride, 1-cyclopentene- 1,2-dicarboxylic anhydride, 1,2,3,6-tetrahydrophthalic anhydride, 3,4,5,6-tetrahydrophthalic anhydride, exo-3,6-epoxy-1,2,3,6-tetrahydrophthalic anhydride, 5-norbornene-2,3-dicarboxylic anhydride, methyl-5-norbornene-2,3-dicarboxylic anhydride, endo-bicyclo[2.2.2]octo-5 -ene-2,3-dicarboxylic anhydride, bicyclo[2.2.2]oct-7-ene-2,3,5,6-tetracarboxylic anhydride, and the like.

Examples of the radical generator used here include organic and inorganic peroxides such as t-butyl hydroperoxide, cumene hydroperoxide, 2,5-dimethylhexane-2,5-dihydroperoxide, 2,5-dimethyl-2,5 -bis(t-butyloxy)hexane, 3,5,5-trimethylhexanoyl peroxide, t-butylperoxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, hydrogen peroxide, and the like; azo compounds such as 2,2'-azobisisobutyronitrile, 2,2'-azobis(isobutyramide) dihalide, 2,2'-azobis[2-methyl-N-(2-hydroxyethyl)propionamide], azodi-t-butane, and the like; carbon radical generators such as dicumyl, and the like.

Various known reaction methods such as a melt-kneading reaction method, a solution reaction method, a suspension dispersion reaction method, and the like can be used for the modification reaction performed when producing the compatibilizer used in the present invention. Usually, a melt-kneading reaction method is preferred.

The melt-kneading is usually carried out at a temperature of 100°C or higher, preferably 120°C or higher, and more preferably 150°C or higher, and usually 300°C or lower, preferably 280°C or lower, and more preferably 250°C or lower, in order to prevent thermal deterioration of the resin.

The blending amount of the unsaturated carboxylic acid component as a modifier is usually 0.01 parts by mass or more, preferably 0.05 parts by mass or more, and more preferably 0.1 parts by mass, or more, and usually 30 parts by mass or less, preferably 5 parts by mass or less, and more preferably 4 parts by mass or less, based on 100 parts by mass of the polyolefin as the raw material resin. By setting the blending amount of the unsaturated carboxylic acid component within the above range, it is economical and sufficient modification can be performed.

The blending amount of the radical generator is usually 0.001 parts by mass or more, preferably 0.005 parts by mass or more, and more preferably 0.01 parts by mass or more, and usually 4. 0 parts by mass or less, preferably 3.0 parts by mass or less, and more preferably 2.0 parts by mass or less, based on 100 parts by mass of the polyolefin as the raw material resin. By setting the blending amount of the radical generator to be equal or more than the above lower limit, sufficient modification can be achieved. By setting the blending amount of the radical generator to be equal or less than the above upper limit, the increase in molecular weight (increase in viscosity) during modification of the polyolefin can be suppressed within a desired range, and the desired modified resin tends to be easily obtained.

In the modification reaction, a graft polymerization reaction in which an unsaturated carboxylic acid component is added to the polyolefin mainly occurs, but a crosslinking reaction also occurs. This crosslinking tends to increase the molecular weight and melt viscosity of the resulting modified product. Therefore, when the amount of the radical generator used is too large, graft polymerization reactions are likely to occur, but at the same time, crosslinking reactions that lead to an increase in melt viscosity are also likely to occur, which is not preferable.

When using a polyolefin modified with maleic anhydride or its derivative (sometimes referred to as "maleic anhydride modified polyolefin") as a compatibilizer of the component (D), the degree of maleic anhydride modification of the maleic anhydride modified polyolefin is preferably 0.1 to 2.0% by mass, more preferably 0.6 to 2.0% by mass, and even more preferably 0.8 to 2.0% by mass.

The degree of maleic anhydride modification of the maleic anhydride modified polyolefin can be measured as follows.

A sheet-shaped press sample having a thickness of 0.1 to 0.4 mm is prepared from the maleic anhydride modified polyolefin using a compression molding machine at a press temperature of 200°C. Next, the spectrum from 2000 to 1600 cm$^{-1}$ of the press sample is measured using a Fourier transform infrared spectrophotometer. The degree of maleic anhydride modification is determined from the absorption characteristic of carboxylic acid or its derivative (C=O stretching vibration band, that is, carbonyl characteristic absorption) in the measured spectrum. Specifically, a baseline is drawn between 1950 cm$^{-1}$ and 1665 cm$^{-1}$ on the obtained spectrum, and the peak area S between 1827cm$^{-1}$ and 1665 cm$^{-1}$ is calculated. Using the obtained peak area S, the content Xm of the structural unit derived from the unsaturated carboxylic acid or its derivative is calculated based on the following formula (1).

$$Xm = k \cdot S / t \cdot \rho \qquad \ldots (1)$$

(In the formula, k represents the coefficient determined based on the NMR quantitative value of the methyl ester of the maleic anhydride modified polyolefin. t (mm) represents the thickness of the sample. $\rho$ represents the density (g/cm$^3$) of the sample. )

As the compatibilizer of the component (D), it is also possible to use a commercially available product. As commercially available product, an appropriate product can be selected and used from "Modiper (registered trademark)" series manufactured by NOF Corporation, "Bond First (registered trademark)" series manufactured by Sumitomo Chemical Co., Ltd., "Tuftec (registered trademark) MP10", "Tuftec (registered trademark) M" series, and "Tuftec (registered trademark) C" series manufactured by Asahi Kasei Corporation, "Modic (registered trademark)" series manufactured by Mitsubishi Chemical Corporation, and the like.

The compatibilizer may be used alone or in combination of two or more different in physical properties, copolymer composition, structure, etc.

<Component (E): Hydrocarbon softener for rubber>

The styrenic thermoplastic elastomer composition of the preferred embodiment of the present invention preferably contains a hydrocarbon softener for rubber of the component (E), in addition to the above-mentioned the components (A) to (D).

As the hydrocarbon softener for rubber as the component (D), process oil such as hydrocarbon oil is used. As the hydrocarbon oil, paraffinic, naphthenic, and other process oils are used. Among these, paraffinic process oil is preferred because it effectively softens the styrenic thermoplastic elastomer composition of the present invention.

It is also possible to use a commercially available product as the hydrocarbon softener for rubber as the component (D). Commercially available products include "Nisseki Polybutene (registered trademark)" HV series manufactured by ENEOS Corporation, "Diana (registered trademark) process oil" PW series manufactured by Idemitsu Kosan Co., Ltd., and "Lucant (registered trademark)" series manufactured by Mitsui Chemicals, Inc. These can be appropriately selected and used.

The hydrocarbon softener for rubber of the component (D) may be used alone or in combination of two or more.

<Component content ratio>

In the styrenic thermoplastic elastomer composition of the present invention, from the viewpoint of compression set, the lower limit of the content of the amide-based polymer of the component (C) is 1% by mass or more, preferably 2% by mass or more, more preferably 3% by mass or more, even more preferably 4% by mass or more, and particularly preferably 5% by mass or more, based on a total amount of the components (A) to (C).

On the other hand, from the viewpoint of flexibility, the upper limit thereof is 45% by mass or less, preferably 43% by mass or less, more preferably 41% by mass or less, even more preferably 39% by mass or less, and particularly preferable 37% by mass or less.

In the styrenic thermoplastic elastomer composition of the present invention, from the viewpoint of flexibility and compression set, the lower limit of the content of the styrene-based elastomer of the component (A) is preferably 10% by mass or more, more preferably 20% by mass or more, even more preferably 30% by mass or more, particularly preferably 35% by mass or more, and especially preferably 40% by mass or more, based on a total amount of the components (A) to (C).

On the other hand, from the viewpoint of moldability and appearance, the upper limit thereof is preferably 95% by mass or less, more preferably 90% by mass or less, even more preferably 87.5% by mass or less, particularly preferably 85% by mass or less, and especially preferably 82.5% by mass or less.

As mentioned above, since the styrenic thermoplastic elastomer composition of the present invention can effectively exhibit the original characteristics as a styrenic thermoplastic elastomer composition, it is preferable that the component (A) is contained in the largest amount in the component composition excluding the component (E).

In the styrenic thermoplastic elastomer composition of the present invention, from the viewpoint compression set, moldability, and appearance, the lower limit of the content of the olefin-based polymer of the component (B) is preferably 1% by mass or more, more preferably 2% by mass or more, even more preferably 3% by mass or more, particularly preferably 4% by mass or more, and especially preferably 5% by mass or more, based on a total amount of the components (A) to (C).

On the other hand, from the viewpoint of flexibility and compression set, the upper limit thereof is preferably 80% by mass or less, more preferably 70% by mass or less, even more preferably 60% by mass or less, particularly preferably 50% by mass or less, especially preferably 45% by mass or less, and most preferably 40% by mass or less.

In the styrenic thermoplastic elastomer composition of the present invention, from the viewpoint of compression set, the component (C) is preferably contained in an amount of 5 parts by mass or more based on 100 parts by mass of the component (B). The amount is more preferably 10 parts by mass or more, and even more preferably 20 parts by mass or more. On the other hand, from the viewpoint of flexibility, the content of the component (C) is preferably 1100 parts by mass or less, more preferably 1000 parts by mass or less, and even more preferably 900 parts by mass or less, based on 100 parts by mass of the component (B).

In the styrenic thermoplastic elastomer composition of the present invention, from the viewpoint of compression set and flexibility, the content of the compatibilizer of the component (D) is 0.1% by mass or more, more preferably 0.5% by mass or more, even more preferably 1.0% by mass or more, and preferably 40% by mass or less, more preferably 30% by mass or less, and even more preferably 20% by mass or less, based on a total amount of the components (A) to (D).

When the styrenic thermoplastic elastomer composition of the present invention contains the component (E), the content of the component (A) based on a total amount of the components (A) and (E) is preferably 25 to 70% by mass, more preferably 30 to 65% by mass, and even more preferably 35 to 60% by mass.

By controlling the content of the component (E) within the above preferred range, desired properties can be easily obtained without bleeding out of the component (E).

In addition, when the styrenic thermoplastic elastomer composition of the present invention contains the component (E), the content of the component (B) based on the total amount of the component (A), the component (B), the component (C), the component (D) and the component (E) is preferably 1.0 to 35% by mass.

By controlling the content of the component (B) within the above preferred range, desired properties can be easily obtained without impairing the molded appearance or flexibility.

In either case, from the viewpoint of effectively obtaining the effects of improving compression set and flexibility by including the components (A) to (D) in the styrenic thermoplastic elastomer composition of the present invention, the total content of the components (A) to (D) in the entire styrenic thermoplastic elastomer composition is preferably 50% by mass or more, more preferably 60% by mass or more, and even more preferably 70% by mass or more.

In addition, when the styrenic thermoplastic elastomer composition of the present invention further contains the component (E), from the viewpoint of effectively obtaining the effects of improving compression set and flexibility by including the components (A) to (E), the total content of the components (A) to (E) in the entire styrenic thermoplastic elastomer composition of the present invention is preferably 50% by mass or more, more preferably 60% by mass or more, and even more preferably 70% by mass or more.

<Other Component>

The styrenic thermoplastic elastomer composition of the preferred embodiment of the present invention may contain other components other than the above-mentioned components (A) to (E) as necessary, as long as the object of the present invention is not impaired.

Other components that may be contained in the styrenic thermoplastic elastomer composition of the preferred embodiment of the present invention include various fillers such as talc, calcium carbonate, and the like, various antiblocking agents, heat stabilizers, antioxidants, lubricants, crystal nucleating agents, coloring agents, polymers other than the components (A) to (D), and the like.

For examples of antioxidants, phenolic antioxidants such as pentaerythritol tetrakis[3-(3,5-di-t-butyl-4-hydroxyphenyl)propionate],4,4',4''-[(2,4,6-trimethyl-1,3,5-benzentriyl)tris(methylene)]tris[2,6-bis(1,1-dimethylethyl)phenol, and the like, phosphorus processing stabilizers such as tris(2,4-di-t-butylphenyl)phosphite, and the like, and hydroxylamine processing heat stabilizers such as oxidation products of alkylamines made from reduced beef tallow are preferred. When using an antioxidant, the blending amount is preferably 0.01 to 1.0 parts by mass, and more preferably 0.05 to 0.5 parts by mass based on 100 parts by mass of the component (A).

Polymers other than the components (A), (B), (C), and (D) that may be contained in the styrenic thermoplastic elastomer composition of the preferred embodiment of the present invention include olefin polymers other than the component (B) and the component (D), polyesters, acrylic polymers, carbonate polymers, vinyl chloride polymers, phenylene ether polymers, styrene polymers, liquid crystal polymers, various elastomers (excluding those falling under the component (A)), and the like. The other polymers mentioned above may contain only one type or two or more types.

When the styrenic thermoplastic elastomer composition of the preferred embodiment of the present invention contains polymers other than the components (A) to (D), in order to fully obtain the effect of containing the components (A) to (D), the content of the other polymers is preferably 50% by mass or less, more preferably 40% by mass or less, and even more preferably 30% by mass or less based on the total amount of the components (A) to (D).

<Method for producing styrenic thermoplastic elastomer composition>

The styrenic thermoplastic elastomer composition of the preferred embodiment of the present invention can be obtained as a solid material such as a pellet by mechanically mixing the above-mentioned components (A) ~ (D) and the optionally used component (E) and other components using a known method such as a Henschel mixer, a V-blender, or a tumbler blender, and then mechanically melt-kneading by a known method and extruding through a die. For the mechanical melt-kneading, general melt-kneaders such as a Banbury mixer, various kneaders, and a single-screw or twin-screw extruder can be used.

<Physical properties of styrenic thermoplastic elastomer composition>

(Duro hardness A)

From the viewpoint of flexibility, the lower limit of the Duro hardness A of the styrenic thermoplastic elastomer composition of the present invention, which is measured with reference to the standard of ISO 7619-1, is preferably 10 or more, more preferably 12.5 or more, and even more preferably 15 or more. Further, the upper limit thereof is preferably 75 or less, more preferably 70 or less, and even more preferably 65 or less, from the viewpoint of flexibility.

The Duro hardness A of the styrenic thermoplastic elastomer composition can be adjusted by controlling the blending ratio of the components (A) to (D) and, when the component (E) is included, by controlling the blending ratio of the component (E).

(Compression set)

The styrenic thermoplastic elastomer composition of the present invention preferably has a compression set (recovery rate) of less than 40%, more preferably 48% or less, and even more preferably 46% or less, as determined as follows. Referring to ISO815-1, six test pieces having a diameter of 29 mm obtained by punching out a plate obtained by injection molding the styrenic thermoplastic elastomer composition of the present invention are stacked and the original thickness (tc) is measured. Thereafter, it is compressed by 25% using a compression device and a spacer (thickness $t_1$), and heat treatment is performed in a gear oven maintained at 70°C for 22 hours. Thereafter, immediately after taking it out of the oven, the test piece is taken out from the compression device under an environment of 23°C and 50% RH and released from compression, and its thickness ($t_2$) is measured 30 minutes later. The compression set is calculated according to the following formula (2).

[Math. 1]

$$CS = \frac{t_0 - t_2}{t_0 - t_1} \times 100 \quad \cdots (2)$$

CS: Compression set (%)

tc: Original thickness of the test piece (mm)

$t_1$: Thickness of the spacer (mm)

$t_2$: Thickness (mm) after 30 minutes after taking out the test piece from the compression device

The compression set of the styrenic thermoplastic elastomer composition can be adjusted by controlling the blending ratio of the components (A) to (D) and, when the component (E) is included, by controlling the blending ratio of the component (E).

(Gel fraction)

The styrenic thermoplastic elastomer composition of the present invention preferably has a gel fraction of 25% by mass or less. A gel fraction of 25% by mass or less means that the crosslinking component contained in the styrenic thermoplastic elastomer composition is small. In medical applications, it is desirable that the content of a crosslinking agent and a crosslinking aid are low from the viewpoint of hygiene, and therefore it is preferable that the gel fraction is low. Furthermore, by controlling the gel fraction to 25% by mass or less, the appearance of the final molded article tends to be improved. Particularly when the molded article is used for medical applications, it is easy to maintain good assembly and adhesion with other members. Also from this point of view, the gel fraction of the styrenic thermoplastic elastomer composition of the present invention is preferably 25% by mass or less.

The gel fraction measurement method specified in JIS K6769 is a method in which the measurement is performed using a pipe that has been crosslinked in the pipe state after actual pipe forming, but in the present invention, for the sake of simplicity, the gel fraction of the styrenic thermoplastic elastomer composition shall be measured by the following method.

<Method for measuring gel fraction of styrenic thermoplastic elastomer composition>

A sheet sample made by injection molding a styrenic thermoplastic elastomer composition to a thickness of 2 mm is used. A sample cut into approximately 0.5 g (sample mass is defined as G1 (g)) is refluxed in xylene at 144°C for 8 hours by Soxhlet extraction in a 200 mesh wire mesh.

Thereafter, the boiling xylene insoluble matter remaining on the wire mesh is dried at 80°C for 3 hours in a vacuum of 10 Torr. The mass of the obtained dried product is weighed (the mass of the boiling xylene insoluble matter is defined as G2 (g)), and the gel fraction is determined by the following formula (3).

$$\text{Gel fraction (mass\%)} = [G2 \text{ (g)} \div G1 \text{ (g)}] \times 100 \dots (3)$$

[Applications of molded article]

According to the styrenic thermoplastic elastomer composition of the present invention, a molded article having excellent compression set and flexibility can be obtained.

Molded article made of the styrenic thermoplastic elastomer composition of the present invention can be used in a variety of fields including medical applications such as gaskets, caps, rubber stoppers, and the like, food applications such as cap liners, and the like, daily miscellaneous goods such as packings, casters, cushioning materials, vibration absorbers, and the like, toys and exercise equipment applications, stationerys such as pen grips, and the like, automobile interior material applications such as shift grips, and the like, packings, and home appliance applications such as vibration absorbers, and the like.

In particular, they are particularly preferably used for medical applications such as gaskets, rubber stoppers, and the like, food applications such as cap liners, and the like, daily miscellaneous goods such as packings, casters, cushioning materials, vibration absorbers, and the like, pakings, home appliance applications such as vibration absorbers, and the like, which require permanent compression deformation.

The styrenic thermoplastic elastomer composition of the present invention has excellent compression set and particularly excellent liquid leakage resistance, so it can be used for various sealing materials, specifically rubber stoppers having needle pricking part such as syringe gaskets, infusion bag rubber stoppers, rubber stoppers for vials, and the like, cap liners, and packings or the like, which require liquid-leakage sealing properties. Its uses are not limited to medical use. For example, it is suitably used for non-medical syringes, droppers, water pitchers, bottle pumps, syringe-type feeders, gaskets for water guns, gaskets for cooking utensils, exterior moldings for automobiles, window wipers for automobiles, and the like.

[Rubber stopper having needle pricking part]

The molded article of the present invention made of the styrenic thermoplastic elastomer composition of the present invention has excellent compression set and excellent liquid-leakage sealing properties, and is therefore particularly useful as a rubber stopper having a needle pricking part.

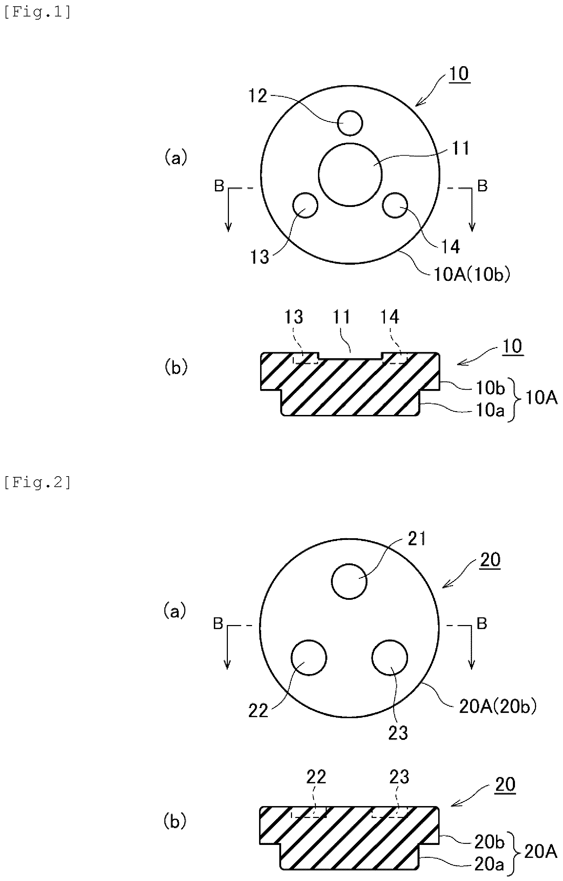

A rubber stopper having a needle pricking part as an embodiment of the molded article of the present invention will be described below with reference to Figs. 1 to 5.

However, the rubber stopper according to the present invention is not limited to those shown in Figs. 1 to 5.

The rubber stopper 10 shown in Fig. 1 has a base body 10A and needle pricking parts 11, 12, 13, and 14. The base body 10A includes a base part (leg part) 10a that is inserted into the opening of a vial or the like, and a lid part 10b. The needle pricking parts 11 to 14 are provided as recesses on the upper surface of the lid part 10b.

In this rubber stopper 10, the needle pricking parts are composed of a needle pricking part 11 having a large diameter and needle pricking parts 12 to 14 having a small diameter provided at equal intervals around the needle pricking part 11.

In this way, by having the needle pricking part 11 and the needle pricking parts 12 to 14 with different diameters, it is possible to insert needles with different diameters. For example, a needle made of plastic and having a large diameter of an infusion set can be inserted into the large diameter of needle pricking part 11 . The small diameter needle pricking parts 12 to 14 can be used for mixing for injecting a medicinal solution or to be inserted a needle made of metal having a small diameter.

The rubber stopper 20 shown in Fig. 2 has the same configuration as the rubber stopper 10 shown in Fig. 1, except that needle pricking parts 21-23 having an equal diameter are provided on the upper surface of the lid part 20b of the base body 20A at equal intervals. In Fig. 2, 20a is the base part (leg part).

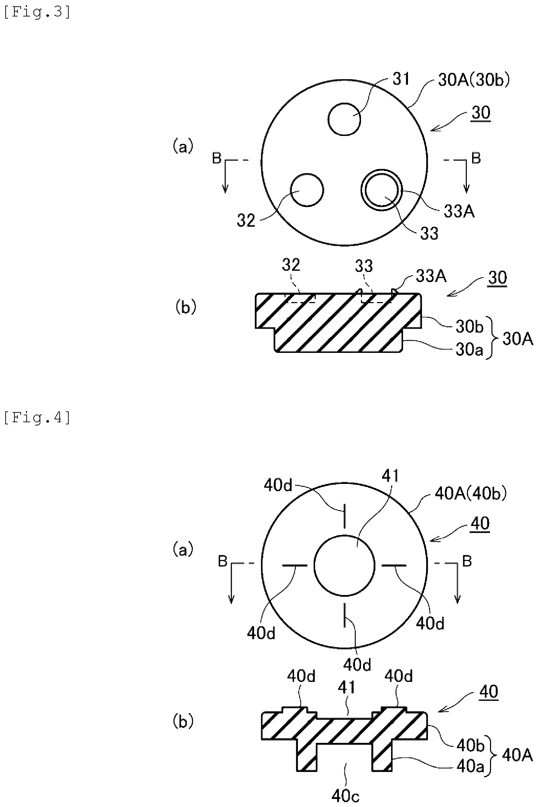

The rubber stopper 30 shown in Fig. 3 has the same configuration as the rubber stopper 20 shown in Fig. 2, except that a convex portion 33A is provided around the peripheral edge of the needle pricking part 33 among the needle pricking parts 31 to 33. In Fig. 3, 30A is the base body, 30a is the base part (leg part) and 30b is the lid part. By providing a convex portion 33A on the peripheral edge of the needle pricking part 33 like this rubber stopper 30, it becomes easy to distinguish it from other needle pricking parts 31 and 32, and it can be used as a mark for injecting the desired drug solution.

The rubber stopper 40 shown in Fig. 4 is provided with a needle pricking part 41 and four convex stripes 40d on the upper surface of the lid part 40b of the base body 40A. A recess 40c is formed in the center of the base part (leg part) 40a of the base body 40A. In this rubber stopper 40, a recess 40c is formed in the base part (leg part) 40a, and the base part (leg part) 40a is annular, so that it can be easily inserted into the mouth of a vial or the like. In addition, in this rubber stopper 40, in order to identify the rubber stopper 40, etc., the needle pricking part 41 is provided in a recessed manner in the center of the lid part 40b, and four convex stripes 40d extending in the radial direction at 90° intervals around the needle pricking part are provided.

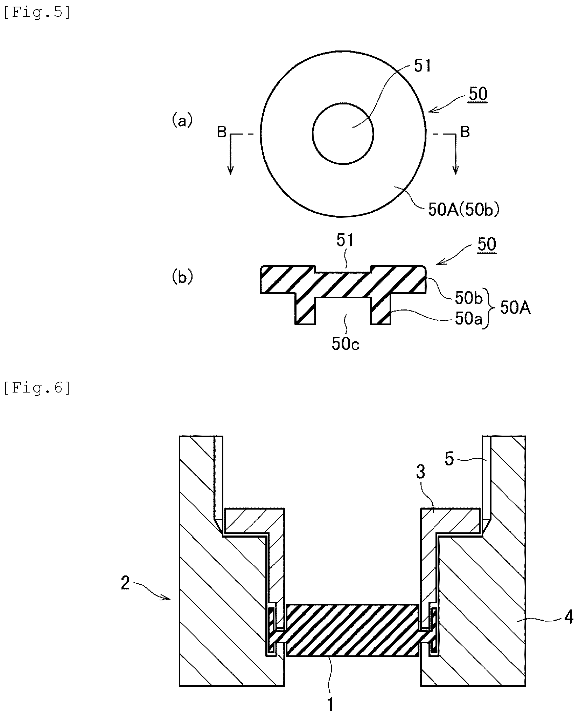

The rubber stopper 50 shown in Fig. 5 has the same configuration as the rubber stopper 40 shown in Fig. 4, except that there is no convex stripe and only a needle pricking part 51 is provided in the center of the lid part 50b. 50A is a base body comprising a base part (leg part) 50a in which a recess 50c is formed and a lid part 50b.

[Infusion bag]

The rubber stopper as described above made of the styrenic thermoplastic elastomer composition of the present invention has excellent compression set and excellent liquid leakage sealing properties, and is therefore useful as a rubber stopper for infusion bags.

The shape, structure, material, and the like of the infusion bag having a rubber stopper made of the styrenic thermoplastic elastomer composition of the present invention are not limited, but usually include the main body of the infusion bag, a port for injecting the drug, a rubber stopper, a cap, and the like.

The shape of the rubber stopper of the infusion bag is not limited, but it may be approximately truncated conical, cylindrical, disc shaped, and the like, and its diameter is usually about 10 to 20 mm. The thickness (thickness in the direction of insertion of the injection needle) of the rubber stopper of the infusion bag is also not limited, but is usually about 4 to 8 mm.

When taking out the contents from an infusion bag having a rubber stopper made of the styrenic thermoplastic elastomer composition of the present invention, whether a metal syringe needle, a plastic syringe needle, or a syringe needle made of other materials may be used. Moreover, the diameter of the injection needle used is also not limited. Furthermore, something other than a syringe needle may be used.

Generally, when a large-diameter syringe needle is used, the liquid leakage resistance becomes poor. However, the rubber stopper made of the styrenic thermoplastic elastomer composition of the present invention has good liquid leakage resistance, an syringe needle having a diameter of 2mm or more, and even 3mm or more can also be used.

EXAMPLES

Now, specific embodiments of the present invention will be described in further detail with reference to examples. The present invention is not limited to the following Examples as long as the present invention is within the gist thereof.

The values of various production conditions and evaluation results in the following Examples are to be understood as preferred upper or lower limit values of embodiments of the present invention, and preferred ranges may be a range defined by a combination of the upper or lower limit value and a value of Examples described below or by a combination of values of Examples described below.

[Raw materials]

The raw materials used in the following Examples and Comparative Examples are shown below.

Component (A): Styrene-based thermoplastic elastomer A-1: Styrene-ethylene-butylene-styrene copolymer (SEES)

Product name of Kraton (registered trademark) G1651HU manufactured by Kraton Polymer Japan Co., Ltd.

Styrene unit content: 33% by mass

Weight average molecular weight (Mw): 264,000
A-2: Hydrogenated product of styrene/butadiene copolymer (styrene/ethylene/butylene/styrene copolymer (SEES) and/or styrene/ethylene/butylene copolymer (SEB))

Product name of Tuftec (registered trademark) N527 manufactured by Asahi Kasei Corporation

Styrene unit content: 21.3% by mass

1,4-microstructure ratio of butadiene: 29.6% by mass

Weight average molecular weight (Mw): 395,000

Number average molecular weight (Mn): 210,000

Molecular weight distribution (PDI): 1.9

Component (B): Olefin-based polymer

B-1: Propylene homopolymer

Product name of Novatec (registered trademark) PP FA3KM manufactured by Japan Polypropylene Corporation
MFR: 10g/10min
(Measurement conditions: 230°C, load 21.2N (JIS K7210-1))

B-2: Modified polypropylene obtained by grafting isoprene onto polypropylene homopolymer

PP processing improvement material 039N manufactured by Kaneka Corporation

MFR: 56g/10min

(Measurement conditions: 230°C, load 21.2N (JIS K7210-1))

Component (C): Amide-based polymer

C-1: Polyamide 11 (PA11)

Product name of Rilsan (registered trademark) BESVO A MED manufactured by Arkema

MVR: 6cm$^3$/10 min

(Measurement conditions: ISO1133, 235°C, load 10kg)

Shore D hardness: 71

(Measurement conditions: ISO 7619-1, 15s)

Melting point: 186°C

(Measurement conditions: 10°C/min, ISO11357-1/11357-3)

BESVO A MED is a plant-derived material made from castor oil.

C-2: Polyether block amide (PA12-PTMG)

Product name of Pebax (registered trademark) 7233 SA 01 MED manufactured by Arkema

Shore D hardness: 61

(Measurement conditions: ISO 7619-1, 15s)

Bending modulus: 513MPa

(Measurement conditions: ISO 527)

Melting point: 174°C

(Measurement conditions: 10°C/min, ISO11357-1/11357-3)

C-3: Polyether block amide (PA12-PTMG)

Product name of Pebax (registered trademark) 3533 SA 01 MED manufactured by Arkema

Shore D hardness: 25

(Measurement conditions: ISO 7619-1, 15s)

Bending modulus: 21MPa

(Measurement conditions: ISO 527)

Melting point: 144°C

(Measurement conditions: 10°C/min, ISO11357-1/11357-3)

C-4: Polyamide 6/Polyamide 66

Product name of Novamid (registered trademark) 2430J manufactured by DSM

Melting point: 193°C

(Measurement conditions: ISO 11357-1/-3)

C-5: Polyamide 6

Product name of Novamid (registered trademark) 1020 manufactured by DSM

Bending modulus: 2600MPa

(Measurement conditions: ISO 178)

Melting point: 220°C

(Measurement conditions ISO 11357-1/-3)

Component (D): Compatibilizer

D-1: Maleic anhydride modified polyethylene produced by the following method

MFR: 1.2g/10min

(Measurement conditions: ISO1133 reference, 190°C, load 2.16kg)

Degree of maleic anhydride modification: 0.7% by mass

50 parts by mass of product name of Novatec (registered trademark) LL UF240 manufactured by Japan Polyethylene Corporation (LLDPE having density of 0.920 g/cm$^3$, and MFR (190°C, 2.16 kg) of 2.0 g/10 min), 50 parts by mass of product name of Novatec (registered trademark) LL UJ480 manufactured by the same corporation (LLDPE having density of 0.923 g/cm$^3$, and MFR (190°C, 2.16 kg) of 30 g/min), 0.8 parts by mass of maleic anhydride, and 0.072 parts by mass of product name of Perhexa (registered trademark) 25B (radical initiator, 2,5-dimethyl-2,5-di(t-butylperoxy)hexane) manufactured by NOF Corporation were mixed and extruded using a twin-screw extruder at a resin temperature of 230°C, a screw rotation speed of 250 rpm, and a discharge rate of 20 kg/hour to obtain a maleic anhydride modified polyethylene.

D-2: Maleic anhydride modified polypropylene produced by the following method

MFR: 64g/10 min

(Measurement conditions: ISO1133 reference, 190°C, load 2.16kg)

Degree of maleic anhydride modification: 1.2% by mass

100 parts by mass of product name of Sun Allomer (registered trademark) VX200N (homopolypropylene having MFR (JIS K6921-2) of 0.45 g/10 min) manufactured by Sun Allomer Ltd., 3.2 parts by mass of maleic anhydride, and 2.0 parts by mass of product name of Niper (registered trademark) FF (organic peroxide, a mixture of 50% of dibenzoyl peroxide and 50% of dicyclohexyl phthalate) manufactured by NOF Corporation were mixed and extruded using a twin-screw extruder at a resin temperature of 170°C, a screw rotation speed of 410 rpm and a discharge rate of 260 kg/hour to obtain a maleic anhydride modified polypropylene.

Component (E): Hydrocarbon softener for rubber (hydrocarbon oil)

E-1: Product name of Diana (registered trademark) process oil PW90 manufactured by Idemitsu Kosan Co., Ltd.

[Evaluation method]

Evaluations of the styrenic thermoplastic elastomer compositions obtained in the following Examples and Comparative Examples were carried out by preparing sheets of the styrene thermoplastic elastomer composition or rubber stopper molded articles of the styrene thermoplastic elastomer composition using the following method. The following evaluations (1) to (3) were conducted for the sheet made of the styrenic thermoplastic elastomer composition, and the following evaluation (4) was conducted for the rubber stopper molded article made of the styrenic thermoplastic elastomer composition.

<Preparation of styrenic thermoplastic elastomer composition sheet>

Obtained pellets were supplied to an in-line screw type injection molding machine (IS130GN manufactured by Toshiba Machine Co., Ltd.), and injection molding was carried out under the conditions of an injection pressure of 40 MPa, a cylinder temperature of 210°C, and a mold temperature of 40°C to obtain a sheet of the styrenic thermoplastic elastomer composition having a wall thickness of 2 mm.

Using this styrenic thermoplastic elastomer composition sheet, evaluations were performed on the following evaluation items (1) to (3).

<Preparation of molded article of styrenic thermoplastic elastomer composition rubber stopper>

The obtained pellets were supplied to an in-line screw type injection molding machine (J110AD-180H manufactured by Japan Steel Works, Ltd.), and injection molding was carried out under the conditions of an injection pressure of 30 MPa, a cylinder temperature of 210°C, and a mold temperature of 40°C to obtain a rubber stopper molded article (rubber stopper molded article 1 in Fig. 6) of the styrenic thermoplastic elastomer composition having a maximum outer diameter of 20.98 mm and a wall thickness of 7.14 mm at the center.

Using this styrenic thermoplastic elastomer composition rubber stopper molded article, evaluation was performed on the following evaluation item (4).

(1) Flexibility (Duro hardness A)

Referring to ISO 7619-1, the Duro hardness A was measured (type A durometer). The Duro hardness A is preferably 10 to 75.

(2) Compression set

Referring to ISO815-1, the compression set (CS) was measured using the method described above at 70°C for 22 hours and 30 minutes after releasing. The compression set is preferably less than 49%.

(3) Gel fraction

A sample obtained by cutting a styrenic thermoplastic elastomer composition sheet having a wall thickness of 2 mm into approximately 0.5 g (sample mass is defined as G1 (g)) was refluxed in xylene at 144°C for 8 hours by Soxhlet extraction in a 200 mesh wire mesh.

Thereafter, the boiling xylene insoluble matter remaining on the wire mesh was dried at 80°C for 3 hours in a vacuum of 10 Torr. The mass of the obtained dried product was weighed (the mass of the boiling xylene insoluble matter is defined as G2 (g)), and the gel fraction was determined by the following formula (3).

$$\text{Gel fraction (mass\%)} = [G2 \ (g) \div G1 \ (g)] \times 100 \ ... \ (3)$$

The gel fraction is preferably 25% by mass or less.

(4) Liquid leakage resistance

The amount of liquid leakage (g) was measured using the following method.

The rubber stopper molded article 1 was fitted into a predetermined jig 2 shown in Fig 6.

Next, using another jig (not shown), a holding ring 3 was fixed to a holder 4 into which the rubber stopper molded article 1 was fitted, so that the holding ring 3 was in complete contact with the holder 4. This was steam sterilized using a high-pressure steam sterilizer model CLS-32S manufactured by ALP Co., Ltd. at a temperature of 121°C and at a steam pressure of 0.1 MPa for 30 minutes.

Thereafter, it was taken out of the high-pressure steam sterilizer and cooled in a constant temperature and humidity room at 23°C and 50% over 12 hours.

Then, in a state where the rubber stopper molded article 1 was fitted into the jig 2 shown in Fig. 6, a resin needle having a diameter (maximum diameter at the base) of 5 mm was inserted into the center of the rubber stopper molded article 1 up to the maximum diameter of the needle. As the resin needle, a plastic needle of a Nipro infusion set ISA-600A00Z manufactured by Nipro Corporation, containing 50 pieces, was used.

Next, in the state shown in Fig. 6, a metal tube having the same diameter was attached to a screw pitch part 5, and 130 g of water was filled therein and fixed.

The sample was left as it was for 4 hours, then the needle was removed, and the mass of water leaking from the needle puncture mark was measured and determined as the amount of liquid leakage. The number of measurements was 6, and the simple average was taken as the measured value.

It was judged that the smaller the amount of liquid leakage, the better the liquid leakage resistance.

[Example 1]

<Preparation of pellets made of styrenic thermoplastic elastomer composition>

As shown in Table-1, 32.0 parts by mass of (A-1), 10.0 parts by mass of (B-1), 10.0 parts by mass of (C-1), 5 parts by mass of (D-1), and 48.0 parts by mass of (E-1) were mixed in this blending amount.

100 parts by mass of the obtained mixture, and 0.05 parts by mass of tetrakis[methylene-3-(3',5'-di-t-butyl-4'-hydroxyphenyl)propionate]methane (Irganox (registered trademark) 1010 manufactured by BASF Japan Co., Ltd.) were fed into a co-directional twin-screw extruder ("TEM26-SS" manufactured by Toshiba Machine Co., Ltd., cylinder diameter 26 mm) at a rate of 20 kg/hour, melt-kneaded at 210°C, and extruded from a die. Thereafter, it was cut to obtain a styrenic thermoplastic elastomer composition in the form of pellets.

Using the obtained pellets of the styrenic thermoplastic elastomer composition, evaluations (1) to (3) were performed, and the results are shown in Table-1.

[Examples 2 to 15 and Comparative Examples 1 to 6]

A styrenic thermoplastic elastomer composition in the form of pellets was obtained in the same manner as in Example 1, except that the composition formulation other than tetrakis[methylene-3-(3',5'-di-t-butyl-4'-hydroxyphenyl) propionate]methane (Irganox (registered trademark) 1010 manufactured by BASF Japan Co., Ltd.) was changed as shown in Tables -1 to 4. Then, above evaluations (1) to (2) or (1) to (3) or (1) to (4) were performed. These evaluation results are shown in Tables -1 to 4.

Note that in Examples 2 to 4, Example 12, and Comparative Examples 1 to 3, the gel fraction was not measured, so the columns for gel fraction in Tables -1 to 3 are left blank.

[Table 1]

[Table 1]

<Table-1>

| Composition formulation (parts by mass) | | | Example 1 | Example 2 | Example 3 | Example 4 | Example 5 | Example 6 | Example 7 |
|---|---|---|---|---|---|---|---|---|---|
| Composition formulation (parts by mass) | Component (A) | A-1 | 32.0 | 30.0 | 29.0 | 31.0 | 33.0 | 34.0 | 34.0 |
| | | A-2 | | | | | | | |
| | Component (B) | B-1 | 10.0 | 5.0 | 3.0 | 12.0 | 8.0 | 10.0 | 10.0 |
| | | B-2 | | | | | | | |
| | Component (C) | C-1 | 10.0 | 20.0 | 25.0 | | | | |
| | | C-2 | | | | 10.0 | | | |
| | | C-3 | | | | | 10.0 | | |
| | | C-4 | | | | | | 5.0 | |
| | | C-5 | | | | | | | 5.0 |
| | Component (D) | D-1 | 5.0 | 5.0 | 5.0 | 5.0 | 5.0 | 5.0 | 5.0 |
| | | D-2 | | | | | | | |
| | Component (E) | E-1 | 48.0 | 45.0 | 43.0 | 47.0 | 49.0 | 51.0 | 51.0 |
| C/(A+B+C) (*1) | | | 19.2 | 36.4 | 43.9 | 18.9 | 19.6 | 10.2 | 10.2 |
| C/B (*2) | | | 100 | 400 | 833 | 83 | 125 | 50 | 50 |
| D/(A+B+C+D) (*3) | | | 8.8 | 8.3 | 8.1 | 8.6 | 8.9 | 9.3 | 9.3 |
| Evaluation results | Duro hardness A | 15s(-) | 52 | 51 | 62 | 59 | 50 | 50 | 47 |
| | Compression set | 70°C, 22h(%) | 41 | 40 | 47 | 44 | 42 | 39 | 38 |
| | Gel fraction | (%) | 11.0 | | | | 0.4 | 2.3 | 4.9 |

*1 Content ratio of the component (C) relative to the total of the component (A), the component (B), and the component (C) (% by mass)
*2 Content ratio of the component (C) to the component (B) (% by mass)
*3 Content ratio of the component (D) relative to the total of the component (A), the component (B), the component (C), and the component (D) (% by mass)

[Table 2]

[Table 2]

<Table-2>

| Composition formulation (parts by mass) | | | Example 8 | Example 9 | Example 10 | Example 11 | Example 12 | Example 13 | Example 14 | Example 15 |
|---|---|---|---|---|---|---|---|---|---|---|
| | Component (A) | A-1 | 33.0 | 32.0 | 32.0 | 32.0 | | | | |
| | | A-2 | | | | | 34.8 | 30.0 | 32.0 | 34.8 |
| | Component (B) | B-1 | 16.0 | 10.0 | 10.0 | 10.0 | | | | |
| | | B-2 | | | | | 3.0 | 15.0 | 10.0 | 3.0 |
| | Component (C) | C-1 | 1.0 | 10.0 | 10.0 | 10.0 | 10.0 | 10.0 | 10.0 | 10.0 |
| | | C-2 | | | | | | | | |
| | | C-3 | | | | | | | | |
| | | C-4 | | | | | | | | |
| | | C-5 | | | | | | | | |
| | Component (D) | D-1 | 1.0 | 2.0 | 15.0 | | | 5.0 | 5.0 | 5.0 |
| | | D-2 | | | | 5.0 | 5.0 | | | |
| | Component (E) | E-1 | 50.0 | 48.0 | 48.0 | 48.0 | 52.2 | 45.0 | 48.0 | 52.2 |
| C/(A+B+C) (*1) | | | 2.0 | 19.2 | 19.2 | 19.2 | 20.9 | 18.2 | 19.2 | 20.9 |
| C/B (*2) | | | 6 | 100 | 100 | 100 | 333 | 67 | 100 | 333 |
| D/(A+B+C+D) (*3) | | | 2.0 | 3.7 | 22.4 | 8.8 | 9.5 | 8.3 | 8.8 | 9.5 |
| Evaluation results | Duro hardness A | 15s(-) | 59 | 54 | 65 | 63 | 25 | 54 | 43 | 24 |
| | Compression set | 70°C, 22h(%) | 46 | 40 | 42 | 44 | 28 | 36 | 31 | 31 |
| | Gel fraction | (%) | 1.8 | 7.7 | 12.1 | 0.4 | | 9.8 | 11.2 | 12.4 |

*1 Content ratio of the component (C) relative to the total of the component (A), the component (B), and the component (C) (% by mass) *2 Content ratio of the component (C) to the component (B) (% by mass) *3 Content ratio of the component (D) relative to the total of the component (A), the component (B), the component (C), and the component (D) (% by mass)

23

[Table 3]

<Table-3>

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition formulation (parts by mass) | Component (A) | A-1 | 32.0 | 34.0 | 32.0 | 29.0 | 30.0 | 29.6 |
| | | A-2 | | | | | | |
| | Component (B) | B-1 | 10.0 | 15.0 | 20.0 | 1.0 | | 26.0 |
| | | B-2 | | | | | | |
| | Component (C) | C-1 | 10.0 | | | 26.0 | 25.0 | |
| | | C-2 | | | | | | |
| | | C-3 | | | | | | |
| | | C-4 | | | | | | |
| | | C-5 | | | | | | |
| | Component (D) | D-1 | | | 5.0 | 5.0 | 5.0 | |
| | | D-2 | | | | | | |
| | Component (E) | E-1 | 48.0 | 51.0 | 48.0 | 44.0 | 45.0 | 44.4 |
| C/(A+B+C) (*1) | | | 19.2 | 0.0 | 0.0 | 46.4 | 45.5 | 0.0 |
| C/B (*2) | | | 100 | 0 | 0 | 2600 | | 0 |
| D/(A+B+C+D) (*3) | | | 0.0 | 0.0 | 8.8 | 8.2 | 8.3 | 0.0 |
| Evaluation results | Duro hardness A | 15s(-) | 51 | 55 | 66 | 68 | 64 | 78 |
| | Compression set | 70°C. 22h(%) | 49 | 51 | 55 | 62 | 61 | 50 |
| | Gel fraction | (%) | | | | 27.6 | 25.7 | 0.8 |

*1 Content ratio of the component (C) relative to the total of the component (A), the component (B), and the component (C) (% by mass)
*2 Content ratio of the component (C) to the component (B) (% by mass)
*3 Content ratio of the component (D) relative to the total of the component (A), the component (B), the component (C), and the component (D) (% by mass)

[Table 4]

<Table-4>

| | | | Example 12 | Example 15 | Comparative Example1 | Comparative Example6 |
|---|---|---|---|---|---|---|
| Composition formulation (parts by mass) | Component (A) | A-1 | | | 32.0 | 29.6 |
| | | A-2 | 34.8 | 34.8 | | |
| | Component (B) | B-1 | | | 10.0 | 26.0 |
| | | B-2 | 3.0 | 3.0 | | |
| | Component (C) | C-1 | 10.0 | 10.0 | 10.0 | |
| | Component (D) | D-1 | | 5.0 | | |
| | | D-2 | 5.0 | | | |
| | Component (E) | E-1 | 52.2 | 52.2 | 48.0 | 44.4 |
| Evaluation results | Duro hardness A | 15s(-) | 25 | 24 | 51 | 78 |
| | Compression set | 70°C. 22h(%) | 28 | 31 | 49 | 50 |
| | Amount of liquid leakage | (g) | 11 | 57 | 116 | 130 |

From Tables -1 to 4, the following can be seen.

The styrenic thermoplastic elastomer composition of the present invention has excellent compression set, flexibility, and liquid leakage resistance, and has a low gel fraction.

On the other hand, in Comparative Examples 2, 3, and 6 that do not contain the component (C), compression set is large and they can not achieve both compression set and flexibility. Similarly, Comparative Example 1 that does not contain the component (D), Comparative Example 4 that contains too much the component (C), and Comparative Example 5 that does not contain the component (B) have large compression set, and can not achieve both compression set and flexibility.

From Table-4, Examples 12 and 15 having small compression set have a small amount of liquid leakage and are excellent in liquid leakage resistance, but Comparative Examples 1 and 6 having large compression set have a large amount of liquid leakage and are inferior in liquid leakage resistance.

Although the present invention has been described in detail using specific embodiments, it will be apparent to those skilled in the art that various changes can be made without departing from the spirit and scope of the present invention.

This application is based on Japanese Patent Application No. 2022-019726 filed on February 10, 2022, which is incorporated by reference in its entirety.

[Reference Signs List]

1 Rubber stopper molded article

2 Jig

3 Holding ring

4 Holder

5 Screw pitch part

## EP 4 477 705 A1

10, 20, 30, 40, 50 Rubber stopper

10A, 20A, 30A, 40A, 50A Base body

10a, 20a, 30a, 40a, 50a Base part (leg part)

10b, 20b, 30b, 40b, 50b Lid

11, 12, 13, 14, 21, 22, 23, 31, 32, 33, 41, 51 Needle pricking part

**Claims**

1. A styrenic thermoplastic elastomer composition comprising the following components (A) to (D), wherein a content of the component (C) is 1 to 45% by mass based on a total amount of the components (A) to (C).

   Component (A): styrene-based thermoplastic elastomer
   Component (B): olefin-based polymer
   Component (C): amide-based polymer
   Component (D): compatibilizer

2. The styrenic thermoplastic elastomer composition according to claim 1, further comprising the following component (E).
   Component (E): hydrocarbon softener for rubber

3. The styrenic thermoplastic elastomer composition according to claim 2, containing the component (A) in the largest amount in the component composition excluding the component (E).

4. The styrenic thermoplastic elastomer composition according to claim 1 or 2, comprising 5 to 1100 parts by mass of the component (C) based on 100 parts by mass of the component (B).

5. The styrenic thermoplastic elastomer composition according to claim 1 or 2, wherein the content of the component (D) is 0.1 to 20% by mass based on the total amount of the components (A) to (D).

6. The styrenic thermoplastic elastomer composition according to claim 1 or 2, wherein a part of the raw material of the component (C) is derived from castor oil.

7. The styrenic thermoplastic elastomer composition according to claim 1 or 2, wherein the styrenic thermoplastic elastomer composition has a Duro hardness A of 10 to 75.

8. The styrenic thermoplastic elastomer composition according to claim 1 or 2, wherein a gel fraction of the styrenic thermoplastic elastomer composition is 25% by mass or less.

9. The styrenic thermoplastic elastomer composition according to claim 1 or 2, wherein the component (D) is a polymer having a nonpolar site and a polar site.

10. The styrenic thermoplastic elastomer composition according to claim 9, wherein the polymer having a nonpolar site and a polar site is a polymer in which a polar site is grafted onto a nonpolar polymer.

11. The styrenic thermoplastic elastomer composition according to claim 10, wherein the polymer in which a polar site is grafted onto a nonpolar polymer is a polymer grafted with at least one selected from the group consisting of unsaturated carboxylic acids and derivatives thereof.

12. The styrenic thermoplastic elastomer composition according to claim 11, wherein the polymer in which a polar site is grafted onto a nonpolar polymer is at least one polymer selected from a maleic anhydride graft-modified olefin-based polymer and a maleic anhydride graft-modified styrene-based elastomer.

13. A molded article made of the styrenic thermoplastic elastomer composition according to claim 1 or 2.

**14.** A sealing material made of the styrenic thermoplastic elastomer composition according to claim 1 or 2.

**15.** The sealing material according to claim 10, wherein the sealing material is a rubber stopper.

**16.** The sealing material according to claim 11, wherein the sealing material is a rubber stopper having a needle pricking part.

**17.** An infusion bag comprising a rubber stopper made of the styrenic thermoplastic elastomer composition according to claim 1 or 2.

[Fig.1]

(a)

12 ⟶ ○
10
11
B ⌐ ---- ⌐ B
13 ○ ○ 14
10A(10b)

(b)

13  11  14
10
10b ⎫
10a ⎬ 10A

[Fig.2]

(a)

21
20
B ⌐ ---- ⌐ B
22 23
20A(20b)

(b)

22  23
20
20b ⎫
20a ⎬ 20A

[Fig.3]

(a)

31  30A(30b)
30

B ---    --- B

32    33A
33

(b)

32    33    33A    30

30b
30a    30A

[Fig.4]

(a)

40d    41    40A(40b)
40

B ---    --- B

40d    40d
40d

(b)

40d    41    40d    40
40b
40a    40A
40c

[Fig.5]

(a)

51
50
B
B
50A(50b)

(b)

51
50
50b
50a } 50A
50c

[Fig.6]

2
3
5
4
1

## INTERNATIONAL SEARCH REPORT

| International application No. |
|---|
| **PCT/JP2022/042995** |

**A.    CLASSIFICATION OF SUBJECT MATTER**

*C08L 23/00*(2006.01)i; *C08L 53/02*(2006.01)i; *C08L 77/00*(2006.01)i
FI:    C08L53/02; C08L23/00; C08L77/00

According to International Patent Classification (IPC) or to both national classification and IPC

**B.    FIELDS SEARCHED**

Minimum documentation searched (classification system followed by classification symbols)

C08L23/00; C08L53/02; C08L77/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 110157135 A (WEGO GROUP CO., LTD.) 23 August 2019 (2019-08-23) claims, paragraphs [0025], [0065]-[0101], examples | 1, 3-14 |
| Y | | 2, 15-17 |
| Y | WO 2017/150714 A1 (MCPP INNOVATION LLC) 08 September 2017 (2017-09-08) claims, paragraph [0094] | 2, 15-17 |
| Y | WO 2011/040586 A1 (KURARAY CO., LTD.) 07 April 2011 (2011-04-07) claims, paragraphs [0039], [0094], examples | 2, 15-17 |
| A | JP 09-316285 A (RIKEN VINYL KOGYO KK) 09 December 1997 (1997-12-09) claims, examples, entire text | 1-17 |

☐ Further documents are listed in the continuation of Box C.   ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2023** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/042995**

| Patent document cited in search report | | | Publication date (day/month/year) | Patent family member(s) | | | Publication date (day/month/year) |
|---|---|---|---|---|---|---|---|
| CN | 110157135 | A | 23 August 2019 | (Family: none) | | | |
| WO | 2017/150714 | A1 | 08 September 2017 | US | 2018/0371250 | A1 | |
| | | | | claims, paragraph [0101] | | | |
| | | | | US | 2020/0362170 | A1 | |
| | | | | EP | 3425003 | A1 | |
| | | | | CN | 108779320 | A | |
| WO | 2011/040586 | A1 | 07 April 2011 | US | 2012/0190786 | A1 | |
| | | | | claims, paragraphs [0075]-[0077], [0158]-[0160], examples | | | |
| | | | | US | 2014/0102930 | A1 | |
| | | | | EP | 2484723 | A1 | |
| | | | | CN | 102575083 | A | |
| JP | 09-316285 | A | 09 December 1997 | US | 5936037 | A | |
| | | | | claims, examples, entire text | | | |
| | | | | US | 2003/0017223 | A1 | |
| | | | | EP | 0810262 | A1 | |
| | | | | EP | 1074579 | A1 | |
| | | | | EP | 1088850 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017150714 A1
- JP H9316285 A
- JP 2015098542 A
- JP 2022019726 A